# DEMANDE DE BREVET EUROPEEN

(11) **EP 0 650 110 A1**
(43) Date de publication de la demande: **26.04.1995**
(21) Numéro de dépôt: 94402371.2
(22) Date de dépôt: 21.10.1994
(51) Int. Cl.: G05D 16/20, G05D 23/19, F25B 21/02

(54) **Procédé et dispositif de génération et/ou régulation de pression d'un fluide à l'aide de modules à effet peltier**

(30) Priorité: 21.10.1993 FR 9312563
(71) Demandeur: DESGRANGES ET HUOT S.A., F-93300 Aubervilliers (FR)
(72) Inventeur: Cohen, Simon, F-75116 Paris (FR); Hugot, Philippe, F-75116 Paris (FR)
(74) Mandataire: Ballot, Paul Denis Jacques

(57) **Abrégé**

Le générateur et/ou régulateur de la pression d'un fluide dans une enceinte (1) fermée, comprend au moins un module à effet Peltier (2) en relation d'échanges thermiques entre l'enceinte (1) et le milieu ambiant (7) par l'intermédiaire d'un échangeur (5). Selon la polarité du courant électrique continu d'alimentation du module (2), ce dernier absorbe ou dissipe de la chaleur dans l'enceinte (1), de sorte qu'il diminue ou augmente respectivement la température, et donc la pression du fluide sous pression contenu dans l'enceinte (1).

Applications à la régulation, autour d'une pression de consigne, de la pression d'un fluide sous pression contenu dans une enceinte fermée.

## Description

La présente invention se rapporte au domaine technique de la génération et de la régulation de la pression des fluides.

Plus précisément, l'invention concerne un procédé et un dispositif de génération et/ou de régulation, autour d'une valeur de consigne, de la pression d'un fluide, tel qu'un gaz ou une huile, contenu dans une enceinte de volume constant et fermé de manière étanche aux fluides.

Par les formules exprimant le comportement physique des fluides tels que les gaz parfaits, à l'équilibre thermodynamique, on sait qu'une variation de la température d'un fluide engendre une variation dans le même sens de la pression de ce fluide, à volume constant et à facteur de compressibilité constant, ce qui peut être admis lorsque la pression évolue dans une plage d'amplitude limitée.

Ce principe est mis en oeuvre dans des installations comprenant des circuits à résistances électriques de chauffage disposées autour de ou noyées dans les parois de l'enceinte fermée, de sorte que par l'alimentation électrique régulée des résistances à partir d'une source de courant, on échauffe l'enceinte et le fluide qu'elle contient de façon à en réguler l'augmentation de pression. La diminution de la pression du fluide, résultant de la diminution de sa température, est obtenue après interruption de l'alimentation électrique des résistances, par refroidissement naturel de l'enceinte, éventuellement amélioré par des ailettes de radiateur portées par l'enceinte, ou par refroidissement forcé de l'enceinte et de son contenu, par la circulation forcée d'un fluide de refroidissement, tel que de l'eau, dans des canalisations d'un circuit de refroidissement entourant l'enceinte, la régulation du refroidissement, et donc de la diminution de pression, étant assurée par des vannes à section de passage variable et à commande électrique, par exemple, par solénoïde.

Dans d'autres installations, le circuit à résistance électrique de chauffage est remplacé par un circuit de chauffage à circulation forcée d'un fluide chaud dans des conduites enveloppant l'enceinte, la régulation étant également assurée par des vannes de section de passage variable et à commande électrique.

Ces installations connues de génération et/ou régulation de pression ont pour inconvénients de comporter deux circuits de structure différente, assurant des transferts de chaleur, dont les inerties et les hystérésis sont différents, ce qui complique leur régulation combinée pour conserver des pressions équilibrées, et pour lesquels les grandeurs physiques mises en jeu peuvent être différentes, leur présence étant de plus un facteur de complexité de réalisation et d'augmentation des coûts, d'autant qu'ils nécessitent des mesures particulières d'entretien et de maintenance, notamment en matière d'étanchéité, puisqu'ils impliquent une circulation de fluide.

Le problème à la base de l'invention est de remédier à ces inconvénients, et l'invention a pour objet de proposer un procédé de génération et/ou régulation de pression d'un fluide qui soit d'une mise en oeuvre aisée et rapide, et d'une grande facilité de commande et de contrôle.

A cet effet, le procédé de génération et/ou régulation de la pression d'au moins un fluide sous pression contenue dans au moins une enceinte de volume constant et fermé de manière étanche aux fluides, se caractérise en ce qu'il comprend les étapes consistant à mettre au moins un module à effet Peltier en relation d'échanges thermiques avec, d'une part, ladite enceinte, et, d'autre part, au moins un milieu caloporteur externe à l'enceinte, à alimenter ledit module à effet Peltier en courant électrique continu de sorte qu'il fonctionne en mode générateur et transfère de la chaleur entre ladite enceinte et ledit milieu externe et à commander la circulation du courant continu dans l'un ou l'autre sens pour que le module à effet Peltier dissipe ou absorbe dans l'enceinte de la chaleur absorbée ou respectivement dissipée dans le milieu externe, afin respectivement d'augmenter ou de diminuer la température et donc la pression, du fluide dans l'enceinte.

Afin d'améliorer les échanges thermiques entre le ou les modules à effet Peltier et le milieu externe, le procédé comprend avantageusement de plus l'étape consistant à mettre au moins un module à effet Peltier en relation d'échanges thermiques avec au moins un milieu caloporteur externe par l'intermédiaire d'au moins un échangeur thermique fonctionnant en absorbeur ou en dissipateur de chaleur dans ledit milieu externe, selon que la polarité du courant continu avec lequel ledit module à effet Peltier est alimenté entraîne respectivement une augmentation ou une diminution de la température, et donc de la pression, du fluide dans l'enceinte.

Afin de simplifier la mise en oeuvre de ce procédé, il est en outre avantageux de choisir l'air ambiant comme milieu caloporteur externe.

Pour permettre une régulation fine de la pression sur une pression de consigne dans l'enceinte, le procédé comprend de plus les étapes consistant à générer un signal de consigne, représentatif de ladite consigne de pression dans l'enceinte, à détecter la pression du fluide dans l'enceinte et à générer un signal de pression représentatif de la pression détectée, à comparer le signal de consigne au signal de pression et à en déduire un signal de commande de l'alimentation électrique d'au moins un module à effet Peltier, de façon à asservir la pression du fluide sur la consigne.

La mise en oeuvre du procédé est encore simplifiée, au niveau de la commande et du contrôle des modules à effet Peltier, si le procédé consiste de plus à mettre au moins une enceinte en relation d'échanges thermiques avec simultanément deux modules à effet Peltier qui sont, d'une part, mis en relation d'échanges thermiques avec le milieu caloporteur externe, chacun par l'intermédiaire de l'un respectivement de deux échangeurs thermiques, et, d'autre part, alimentés en courant électrique, de sorte que l'un des échangeurs fonctionne en absorbeur et l'autre en dissipateur de chaleur dans ledit milieu externe.

L'invention a également pour objet un dispositif de structure simple et économique, se suffisant d'une alimentation électrique pour son fonctionnement, et assurant une mise en oeuvre aisée, précise et fiable du procédé selon l'invention et tel que présenté ci-dessus.

A cet effet, le dispositif générateur et/ou régulateur de l'invention se caractérise en ce qu'il comprend au moins un module à effet Peltier, monté en relation d'échanges thermiques entre ladite enceinte et au moins un milieu caloporteur externe à l'enceinte, des moyens d'alimentation dudit module à effet Peltier en courant électrique continu, de sorte qu'il transfère de la chaleur entre ladite enceinte et ledit milieu externe, et des moyens de commande de l'alimentation électrique dudit module à effet Peltier, permettant de commander la polarité et/ou l'intensité dudit courant continu, de sorte que ledit module à effet Peltier fonctionne en dissipateur ou absorbeur de chaleur dans l'enceinte afin respectivement, d'augmenter ou de diminuer la température et donc la pression du fluide dans l'enceinte.

Un bon compromis entre la qualité des échanges thermiques et la facilité de mise en oeuvre procurée par le choix de l'air ambiant comme milieu caloporteur externe est assuré si le dispositif comprend avantageusement de plus, au moins un échangeur thermique, monté en relation d'échanges thermiques entre au moins un module à effet Peltier et l'air ambiant, ou de manière plus générale, le milieu ambiant constituant le milieu caloporteur externe, l'échangeur thermique fonctionne en absorbeur ou en dissipateur de chaleur dans le milieu ambiant selon que le ou les modules à effet Peltier avec lequel il est en relation d'échanges thermiques fonctionnent respectivement en dissipateurs ou absorbeurs de chaleur dans l'enceinte pour respectivement, augmenter ou diminuer la température et donc la pression du fluide.

Dans une forme de réalisation très pratique, le dispositif comprend au moins deux modules à effet Peltier, montés chacun en relation d'échanges thermiques entre l'enceinte et l'un respectivement d'au moins deux échangeurs thermiques en relation d'échanges thermiques avec le milieu ambiant, des moyens d'alimentation en courant électrique continu, qui alimente les deux modules de sorte que l'un fonctionne en absorbeur et l'autre en dissipateur de chaleur dans l'enceinte, et que les échangeurs thermiques associés fonctionnent respectivement en dissipateur et en absorbeur de chaleur dans le milieu ambiant, au moins un capteur de pression, détectant la pression dans au moins un volume dudit fluide en communication avec l'enceinte, et délivrant un signal de pression, des moyens générateurs d'un signal de consigne, représentatif d'une consigne de pression dans l'enceinte, et des moyens de commande de l'alimentation électrique des modules, comprenant des moyens comparateurs, recevant les signaux de consigne et de pression, et les comparant pour en déduire un signal de commande des moyens d'alimentation en courant électrique continu.

Pour faciliter le contrôle et la commande du dispositif, il est alors avantageux que les moyens générateurs d'un signal de consigne et les moyens de commande de l'alimentation électrique des modules soient regroupés dans un micro-contrôleur de régulation et pilotage, programmé pour commander l'asservissement de la pression dans l'enceinte sur la pression de consigne.

Afin d'améliorer la relation d'échanges thermiques entre au moins un module à effet Peltier et le fluide dans l'enceinte, ledit module est avantageusement appliqué contre une partie de l'enceinte réalisée en un matériau bon conducteur de la chaleur et/ou contre au moins une pièce d'un tel matériau interposée entre ledit module et l'enceinte.

D'autres avantages et caractéristiques de l'invention découlent de la description donnée ci-dessous, à titre non limitatif, d'exemples de réalisation décrits en référence aux dessins annexés sur lesquels:
- la figure 1 est la reproduction schématique d'un dispositif générateur et/ou régulateur de pression à un seul module à effet Peltier fonctionnant de manière à augmenter la pression;
- la figure 2 est la reproduction schématique du dispositif de la figure 1 dont le module à effet Peltier fonctionne de manière à diminuer la pression; et
- la figure 3 est un schéma représentatif d'un générateur/régulateur de pression à deux modules à effet Peltier.

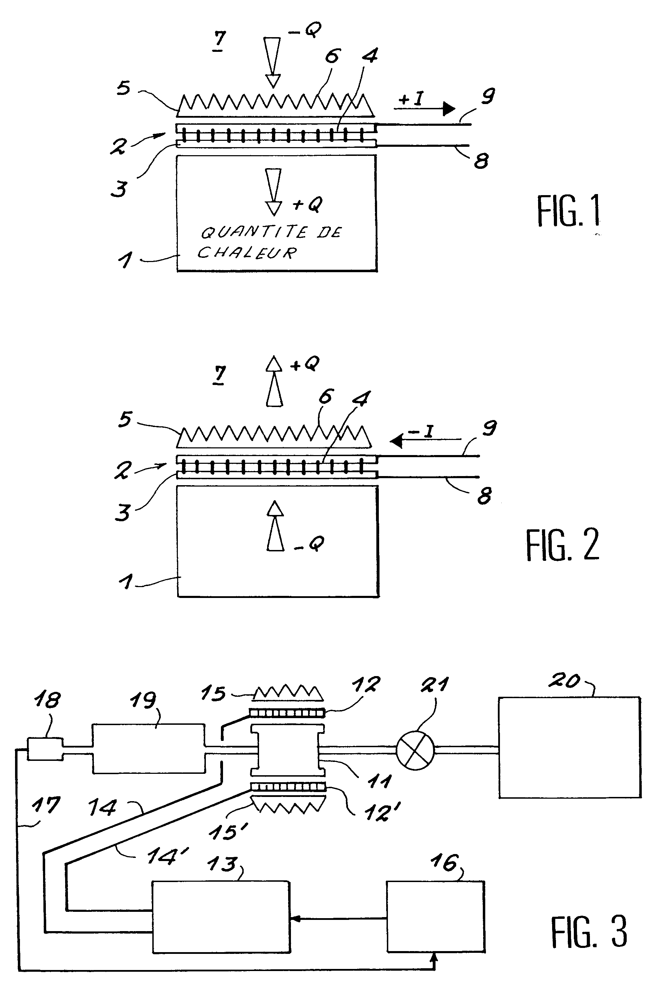

Le générateur/régulateur de pression des figures 1 et 2 comprend une enceinte 1, de volume constant, remplie d'un fluide sous pression et fermée de manière étanche. Une face 3 d'un module à effet Peltier 2 est disposée immédiatement en regard de la face externe de l'enceinte 1, et éventuellement directement en contact avec elle, pour être en relation d'échanges thermiques avec l'enceinte 1 et son contenu. L'autre face 4 du module 2 est disposée dans la même configuration vis-à-vis d'un échangeur thermique 5, muni de dents ou d'ailettes 6 présentant une grande surface d'échanges thermiques avec l'air ambiant 7. Ainsi, le module à effet Peltier 2, dont les faces 3 et 4 sont solidaires chacune de l'une respectivement de deux électrodes 8 et 9 d'alimentation en courant électrique continu, est monté entre l'enceinte 1 et l'échangeur 5 et en relation d'échanges thermiques avec chacun d'eux.

Le module à effet Peltier 2 est un composant semiconducteur connu, comportant un grand nombre de thermocouples associés en série entre ses faces 3 et 4 électriquement et thermiquement conductrices, et qui possède deux modes de fonctionnement, en moteur ou en générateur.

En mode moteur, le module à effet Peltier 2 convertit une variation de température de son environnement direct en une variation de courant à ses bornes 8 et 9.

En mode générateur, dès que le module à effet Peltier 2 est alimenté en courant électrique continu par ses bornes 8 et 9, il absorbe ou dissipe de la chaleur dans son environnement direct suivant la polarité du courant continu qui lui est envoyé.

Le générateur/régulateur de pression de l'invention fait application du fonctionnement du module à effet Peltier 2 en mode générateur: lorsqu'un courant continu (+ I) circule de la borne 9 à la borne 8, une quantité de chaleur (- Q) est absorbée dans l'air ambiant 7 au travers de l'échangeur 5 et dissipée par le module 2 dans l'enceinte 1 et le fluide qu'elle contient. Cette chaleur dissipée (+ Q) correspond à une augmentation de la température, et donc de la pression, du fluide dans l'enceinte 1, comme représenté schématiquement sur la figure 1.

L'échangeur 5 fonctionne alors en absorbeur thermique, transmettant de la chaleur au module 2, qui fonctionne en dissipateur de cette chaleur dans l'enceinte 1 et son fluide.

Inversement, comme montré sur la figure 2, lorsque le courant continu (- I) circule de la borne 8 à la borne 9, le module à effet Peltier 2 absorbe une quantité de chaleur (- Q) dans l'enceinte 1 et la transmet à l'échangeur 5, qui dissipe cette chaleur (+ Q) dans l'air ambiant 7. Cette chaleur absorbée (- Q) dans l'enceinte 1 correspond à une diminution de la température, et donc de la pression du fluide dans l'enceinte 1.

L'échangeur 5 fonctionne alors en dissipateur thermique, recevant de la chaleur du module 2, qui fonctionne en absorbeur.

Sur l'exemple de la figure 3, le générateur/régulateur de pression comprend deux modules à effet Peltier 12 et 12', identiques au module 2 de l'exemple précédent, et chacun en relation d'échange thermique avec, d'une part, l'une respectivement de deux faces opposées de l'enceinte 11 fermée contenant un fluide sous pression, et d'autre part, l'un respectivement de deux échangeurs thermiques 15 et 15', identiques à l'échangeur 5 de l'exemple précédent, et eux-mêmes en relation d'échanges thermiques avec l'air ambiant.

Par les conducteurs électriques bifilaires 14 et 14', les modules à effet Peltier 12 et 12' sont respectivement alimentés en courant électrique continu depuis une unité 13 d'alimentation en courant continu, de sorte que le module 12 fonctionne en dissipateur dans l'enceinte 11 de la chaleur qu'il reçoit de l'échangeur 15, fonctionnant en absorbeur de chaleur dans l'air ambiant, tandis que le module 12' fonctionne en absorbeur dans l'enceinte 11 de chaleur qu'il transmet à l'échangeur 15', fonctionnant en dissipateur de cette chaleur dans l'air ambiant.

L'alimentation électrique du module 12 entraîne donc l'augmentation de la température, et donc de la pression du fluide sous pression dans l'enceinte 11, tandis que l'alimentation électrique du module 12' entraîne la diminution de la température, et donc de la pression de ce fluide sous pression dans cette enceinte 11.

Pour permettre un bon échange thermique avec le fluide sous pression, le contact entre chaque module 12 ou 12' et l'enceinte 11 est assuré par une pièce intermédiaire en un métal ou alliage bon conducteur de la chaleur, par exemple en cuivre. En variante, chaque module 12 ou 12' est directement appliqué contre une partie de l'enceinte 11 réalisée en un matériau bon conducteur de la chaleur.

L'unité d'alimentation 13 est pilotée extérieurement par un microprocesseur 16 de contrôle et pilotage, qui commande l'asservissement de la pression du fluide dans l'enceinte 11 autour d'une pression de consigne. Le microprocesseur 16 comporte des circuits et exécute des programmes informatiques permettant de générer un signal de consigne de pression, et de le comparer à un signal de pression mesurée, qu'il reçoit par la ligne 17 d'un capteur de pression 18, détectant la pression régnant dans le volume 19 de fluide sous pression en communication avec l'intérieur de l'enceinte 11, et donc à la même pression que cette dernière. Le microprocesseur 16 calcule un signal d'erreur et délivre un signal de commande à l'unité d'alimentation 13, pour assurer le contrôle et l'asservissement de l'alimentation électrique des modules à effet Peltier 12 et 12' en fonction des variations de la pression mesurée.

La mise sous pression initiale du fluide dans l'enceinte 11 peut être assurée à partir d'un générateur de pression 20, relié à l'enceinte 11 par une conduite sur laquelle est montée une vanne d'isolement 21.

## Revendications

1. Procédé de génération et/ou de régulation de la pression d'au moins un fluide sous pression contenu dans au moins une enceinte (11) de volume constant, fermée de manière étanche aux fluides et mise en relation d'échanges thermiques avec au moins un module à effet Peltier (12), caractérisé en ce qu'il consiste à mettre ladite enceinte (11) en relation d'échanges thermiques avec simultanément un second module à effet Peltier (12'), ces deux modules à effet Peltier d'une part étant également mis en relation d'échanges thermiques avec un milieu caloporteur (7) externe à l'enceinte (11) chacun par l'intermédiaire d'un échangeur thermique associé (15, 15') et d'autre part étant alimenté en courant électrique continu (13, 14, 14') de sorte qu'un premier module (12) fonctionne en dissipateur dans l'enceinte (11) d'une quantité de chaleur absorbée dans le milieu caloporteur (7) au travers de l'échangeur associé (15), et que le second module (12') fonctionne en absorbeur dans l'enceinte (11) d'une quantité de chaleur dissipée dans le milieu caloporteur (7) au travers de l'échangeur associé (15') audit second module (12').

2. Procédé selon la revendication 1, caractérisé en ce qu'il comprend, de plus, les étapes consistant à :
- générer un signal de consigne (16), représentatif d'une consigne de pression dans l'enceinte (11) ;
- détecter (18) la pression du fluide dans l'enceinte (11) et à générer un signal de pression représentatif de la pression détectée ;
- comparer le signal de consigne au signal de pression et à en déduire un signal de commande (16) de l'alimentation électrique (13) des deux modules à effet Peltier (12, 12') de façon à asservir la pression du fluide sur la consigne.

3. Procédé selon une des revendications 1 ou 2, caractérisé en ce que le milieu caloporteur externe (7) est l'air ambiant.

4. Dispositif de génération et/ou de régulation de la pression d'au moins un fluide sous pression continu dans au moins une enceinte (11) de volume constant, fermé de manière étanche au fluide, caractérisé en ce qu'il comprend au moins deux modules à effet Peltier (12, 12') montés chacun en relation d'échanges thermiques entre ladite enceinte (11) et l'un respectivement d'au moins deux échangeurs thermiques (15, 15') en relation d'échanges thermiques avec le milieu ambiant, des moyens d'alimentation en courant électrique continu (13) qui alimente les deux modules (12, 12'), de sorte que l'un fonctionne en absorbeur et l'autre en dissipateur de chaleur dans l'enceinte (11), et que les échangeurs thermiques (15, 15') associés fonctionnent respectivement en dissipateur et en absorbeur de chaleur dans le milieu ambiant, au moins un capteur de pression (18) détectant la pression dans au moins un volume (19) dudit fluide en communication avec l'enceinte (11), et délivrant un signal de pression mesuré, des moyens (16) générateurs d'un signal de consigne, représentatif d'une consigne de pression dans l'enceinte (11), des moyens (16) de commande de l'alimentation électrique des modules (12, 12'), comprenant des moyens comparateurs recevant les signaux de consigne et de pression mesurée et les comparant pour en déduire un signal de commande des moyens d'alimentation (13) en courant électrique continu.

5. Dispositif selon la revendication 4, caractérisé en ce que les moyens générateurs d'un signal de consigne et les moyens de commande de l'alimentation électrique des modules (12, 12') sont regroupés dans un micro-contrôleur (16) de régulation et pilotage, programmé pour commander l'asservissement de la pression dans l'enceinte (11) sur la pression de consigne.
